Europäisches Patentamt

European Patent Office

Office européen des brevets

(19)

(11) EP 1 271 837 A1

(12) DEMANDE DE BREVET EUROPEEN

(43) Date de publication:
02.01.2003 Bulletin 2003/01

(51) Int Cl.⁷: H04L 7/02

(21) Numéro de dépôt: 02368066.3

(22) Date de dépôt: 28.06.2002

(84) Etats contractants désignés:
AT BE CH CY DE DK ES FI FR GB GR IE IT LI LU
MC NL PT SE TR
Etats d'extension désignés:
AL LT LV MK RO SI

(30) Priorité: 29.06.2001 FR 0108694

(71) Demandeur: STMicroelectronics S.A.
92120 Montrouge (FR)

(72) Inventeurs:
• Brossier, Jean-Marc
  38400 Saint Martin d'Hères (FR)
• Lenez, Thierry
  38000 Grenoble (FR)

(74) Mandataire: Schuffenecker, Thierry
97, chemin de Cassiopée,
Domaine de l'étoile
06610 La Gaude (FR)

(54) **Dispositif de synchronisation et d'égalisation pour un récepteur de système de transmission numérique**

(57)    Un Récepteur pour un dispositif de communication numérique de données destiné à recevoir un signal numérique et comportant un échantillonneur libre procédant à une prise physique d'échantillons $r_k$ du signal reçu r(t) à une fréquence au moins égale au double de la fréquence maximale du spectre du signal reçu. Un interpolateur numérique permet de dériver en fonction d'un paramètre de réglage $\tau$ une séquence d'échantillons $X_k$ calculés à partir desdits échantillons physiques. Un égaliseur ajustable par un jeu de paramètres d'égalisation e permet de traiter les échantillons $X_k$ en sortie dudit interpolateur. Une unité de calcul fournit simultanément en un même traitement numérique les valeurs de $\tau$ destinée à l'interpolateur numérique et les valeurs des paramètres d'égalisation $\underline{e}$ destinés à l'égaliseur numérique. L'invention fournit également un procédé de traitement numérique d'un signal reçu dans un dispositif de communication numérique.

Fig.2

EP 1 271 837 A1

## Description

## Domaine technique de l'invention

La présente invention concerne le domaine des transmissions numériques de données et plus particulièrement un dispositif de synchronisation et d'égalisation pour un récepteur dans un système de transmission numérique.

## Etat de la technique

L'homme du métier qui doit concevoir un récepteur pour un système de transmission numérique, qu'il s'agisse d'un récepteur destiné à recevoir un signal en bande de base ou la sortie d'un démodulateur complexe dans le cas d'une modulation-démodulation, se trouve classiquement confronté aux deux problèmes majeurs que sont la synchronisation symbole et l'égalisation.

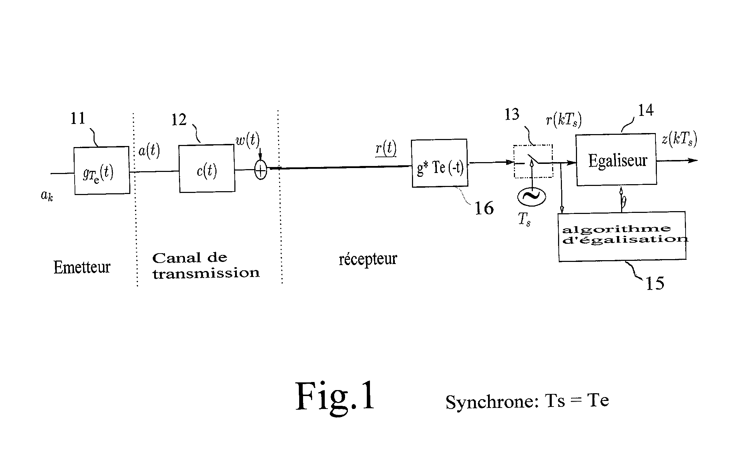

Le premier problème est celui de la synchronisation symbole , lequel est également connu sous le nom de synchronisation rythme (ou *timing recovery* ou *clock recovery* dans la littérature spécialisée anglo-saxonne). La synchronisation symbole consiste à permettre au récepteur d'extraire du signal reçu en bande de base - voire de l'enveloppe complexe du signal reçu dans le cas d'une modulation-démodulation - l'horloge qui a été utilisée à l'émission pour insérer la séquence de symboles numériques a(k) qui sont porteurs d'information. La figure 1 rappelle la modélisation classique d'une chaîne de communication numérique dans laquelle on trouve un émetteur modélisé par un filtre 11 associé par transformée de Fourier à une réponse impulsionnelle $g_{Te}$ (t) correspondant à la mise en forme à l'émission de la séquence de symboles a(k) et sa transformation en une forme d'onde continue, un canal de transmission 12 associé également par transformée de Fourier à une réponse impulsionnelle c(t) et qui vient en outre ajouter un certain bruit w(t). Pour la partie récepteur, on trouve un échantillonneur 13 commandé par une horloge d'échantillonnage de période $T_s$, un filtre égaliseur 14 et un dispositif de commande 15 du filtre égaliseur. Comme on le voit, une fois reconstituée localement, l'horloge de réception sert à commander le prélèvement des échantillons du signal reçu r(t) à une cadence k x $T_s$ , laquelle se doit d'être synchrone avec les temps symboles à l'émission.

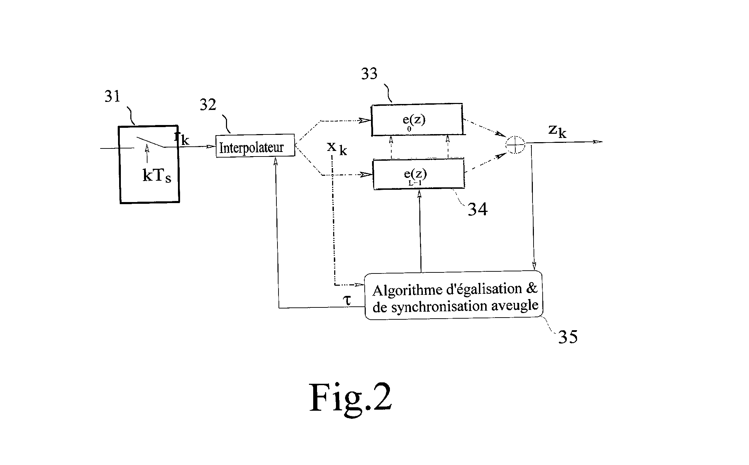

De nombreuses techniques existent permettant de réaliser cette synchronisation symbole en vue de restituer une horloge en réception qui fournisse les moments optimums d'échantillonnage du signal reçu. Toutes ces techniques souffrent cependant d'un défaut majeur, lequel résulte de leur sensibilité au canal de transmission C(t). En effet, les techniques qui sont couramment employées s'appuient sur l'hypothèse d'une influence négligeable du canal de transmission ou - ce qui n'est guère mieux, d'un signal correctement égalisé. Si l'on peut, d'une manière générale, connaître avec une certaine précision la réponse impulsionnelle à l'émission $g_{Te}$ (t) ( représenté par l'élément 11 sur la figure 1) et par conséquent envisager un filtre adapté $g^*_{Te}$(-t) avant l'échantillonnage par l'élément 13, la valeur précise de la réponse impulsionnelle du canal de transmission reste indéterminée et indéterminable avant la prise d'échantillons par l'échantillonneur 13. La figure 2 illustre la structure classiquement préconisée d'un récepteur qui comporte un tel traitement préalable avant l'échantillonnage du signal de réception. On opère un filtrage adapté au moyen d'un filtre 16 dont la réponse impulsionnelle est $g^*_{Te}$(-t) et qui assure ainsi le traitement adapté à la mise en forme à l'émission. Ce filtrage est ensuite suivi de l'échantillonnage synchrone par l'échantillonneur 13, puis d'un traitement numérique optimal au moyen du filtre numérique 14. Comme on le voit, si on arrive à compenser ainsi l'effet de la mise en forme à l'émission, on ne peut cependant prendre en compte et traiter l'effet du milieu de propagation, lequel tend à devenir de plus en plus important à mesure que l'on sollicite ce même milieu à des fréquences plus élevées. Avec les vitesses de transmission qui sont couramment pratiquées aujourd'hui, on ne saurait plus considérer comme négligeable l'effet du milieu physique de propagation en sorte que le dispositif de pilotage de l'échantillonneur 13 se trouve perturbé par l'effet convolutif résultant de la fonction de transfert du canal de propagation.

Le second problème auquel se trouve confronté le concepteur d'un système de réception est celui de l'égalisation, c'est à dire la prise en compte du canal de transmission dont on a déjà pu évoquer le caractère indéterminé et variable. Lorsque les vitesses de transmission s'accroissent, la durée du temps symbole devient courte par rapport à la longueur de la réponse impulsionnelle du canal de transmission. Cela signifie que, à chaque instant précis, le signal reçu par le récepteur dépend de plusieurs symboles consécutifs. L'effet du canal tend à introduire une convolution entre les différents symboles émis. D'une manière générale, on tend à compenser les effets du canal de transmission en procédant à une égalisation au moyen d'un filtre numérique 14 que l'on introduit en aval de l'échantillonneur comme on le voit dans les figures 1 et 2. On ajuste les paramètres ou coefficients internes de ce filtre numérique d'égalisation de manière à compenser au mieux l'effet introduit par le milieu de transmission. Dans certaines techniques connues, on ajuste les paramètres en procédant à une phase préliminaire d'apprentissage au cours de laquelle on procède à l'émission réception d'une séquence de symboles qui sont connus du récepteur afin que ce dernier puisse ajuster convenablement ses paramètres d'égalisation. Dans d'autres techniques, on utilisent des algorithmes numériques adaptatifs qui opèrent en « aveugle », c'est à dire qui ne recourent pas à une telle phase d'apprentissage préliminaire.

Classiquement, les techniques connues d'égalisation, mais également les techniques de synchronisation que l'on a évoquées précédemment, opèrent indépendamment les unes des autres. Clairement, le concepteur d'un système de synchronisation part couramment du postulat suivant lequel le signal qui est reçu - et dont il doit prélever des échantillons de manière synchrone à des instants judicieusement choisis - provient d'un canal parfait ou correctement égalisé. Inversement, celui qui s'attache à concevoir un dispositif d'égalisation va s'appuyer sur une prise d'échantillons qu'il va supposer synchrone avec l'émission, c'est-à-dire coïncidant parfaitement avec les temps symboles à l'émission de manière à assurer la convergence du processus d'adaptation de son filtre numérique d'égalisation.

Comme on le voit, l'approche classique présente des limitations rédhibitoires car on ne peut régler parfaitement les deux problèmes indépendamment l'un de l'autre. il convient de reconsidérer complètement l'architecture d'un récepteur d'un système de transmission pour envisager de traiter correctement, d'une manière conjointe et simultané, le signal reçu et par conséquent le problème de la synchronisation symbole et celui de l'égalisation du canal.

**Exposé de l'invention**

La présente invention a pour but de proposer une nouvelle architecture pour un récepteur d'un système de transmission numérique, laquelle permet de remédier conjointement aux problèmes de synchronisation symbole et d'égalisation par un traitement numérique unique du signal reçu, qu'il s'agisse d'un signal en bande de base ou de l'enveloppe complexe d'un signal dans le cas d'une modulation suivie d'une démodulation.

Un autre but de l'invention consiste à réaliser un récepteur pour un système de communication numérique qui permettent de réaliser la synchronisation et l'égalisation, d'une manière conjointe et aveugle, avec un système entièrement numérique.

Un autre but de la présente invention consiste à proposer une architecture de récepteur particulièrement simple à concevoir et peu coûteuse à mettre en oeuvre.

Ces buts sont atteints au moyen d'une structure de récepteur qui comporte un échantillonneur libre fonctionnant à une vitesse au moins égale à deux fois la valeur nominale du temps symbole et qui est destiné à prélever des échantillons physiques dudit signal reçu $r(t)$ à des instants $k \times T_s$ sans relation de phase avec les temps symboles utilisés à l'émission. Un interpolateur est utilisé pour déterminer par calcul numérique de nouvelles valeurs d'échantillons $r_k$ du signal

$$r_k = r(t) \mid_{t = k\, Ts + \tau k}$$

à des instants $k \times T_s + \tau_k$ différents des instants originellement échantillonnés.

En procédant à une prise d'échantillons suffisamment rapide - c'est à dire au moins deux fois la valeur maximale du spectre de fréquence du signal reçu, on arrive ainsi à reléguer le traitement des deux opérations de la synchronisation symbole et de l'égalisation en aval de la prise d'échantillons par l'échantillonneur libre, ce qui permet ainsi de régler simultanément et d'une manière conjointe les deux problèmes.

On arrive ainsi à une grande simplification de la partie analogique du récepteur, puisqu'il n'est plus nécessaire de concevoir des échantillonneurs bloqués commandés par des dispositifs annexes. Il suffit d'un simple échantillonneur libre qui opère à une fréquence fixe $(1/T_s)$. La réalisation du récepteur s'en trouve considérablement simplifiée et les coûts de fabrication de la partie analogique en sont réduits. En particulier il n'est même plus nécessaire de prévoir, en amont de l'échantillonneur comme cela est classiquement préconisé, un filtre réalisant l'adaptation au filtre de mise en forme à l'émission.

En outre, comme c'est un seul et même traitement numérique qui va être effectué en aval de l'échantillonneur libre, il devient possible d'assurer la synchronisation symbole (par la détermination du paramètre de réglage $\tau_k$) et de l'égalisation (par la détermination des coefficients du filtre égaliseur) par un unique traitement numérique. On arrive ainsi à obtenir de bien meilleurs résultats sur le plan pratique que suivant l'approche classique qui consiste à traiter séparément les deux problèmes.

Dans un mode de réalisation préféré, un critère unique que l'on cherche à minimiser (ou à maximiser selon le cas) permet de réaliser d'une manière conjointe l'estimation du paramètre $\tau_k$ et la convergence des paramètres de l'égaliseur. Ce critère est basé sur le calcul d'une fonction de coût qui pourra être objectivement une distance entre l'élément complexe en sortie de l'égaliseur et un cercle à module constant, par exemple l'unité.

Plus spécialement, on pourra adopter la minimisation de la distance suivante :

$$J\,(\tau\,,\,\underline{e}\,) = E\,(\,(\,|Z_k\,(\tau\,,\,\underline{e})|^{\,p} - R_p)^m\,)$$

Dans laquelle $\tau$ est le paramètre de réglage de l'interpolateur, $\underline{e}$ est le vecteur composé des paramètres d'égalisation, E est l'opérateur renvoyant l'espérance mathématique, $R_p$ est une constante, $|Z_k|$ est le module du vecteur complexe en sortie du filtre d'égalisation et p et m sont des entiers, par exemple p=m=2.

$$R_p = E(\,|a|^{2p})/\,E(\,|a|^{p})$$

L'invention réalise également un procédé permettant de traiter le signal reçu dans un dispositif de communication numérique, lequel procédé comporte les étapes suivantes :

- effectuer au moyen d'un échantillonneur libre une prise physique d'échantillons $r_k$ du signal reçu r(t) à une fréquence au moins égale au double de la fréquence maximale du spectre du signal reçu;
- dériver par interpolation numérique une séquence d'échantillons $X_k$ calculés à partir desdits échantillons physiques en fonction d'un paramètre de réglage $\tau$;
- égaliser les échantillons $X_k$ en fonction d'un jeu de paramètres d'égalisation $\underline{e}$ ;
- optimiser en un même traitement numérique les valeurs de $\tau$ destinée à l'interpolateur numérique et les valeurs des paramètres d'égalisation $\underline{e}$ destinés à l'égaliseur numérique.

D'une manière préférée, le traitement optimal procède à la minimisation d'une fonction de coût J ($\tau$ , $\underline{e}$ ) basée sur une caractéristique du procédé de modulation employé.

## Description des dessins

La figure 1 illustre la structure d'un récepteur connu dans lequel on effectue un filtrage destiné à compenser la mise en forme à l'émission avant la prise d'échantillons. Ce filtre peut être un filtre adapté à l'impulsion de mise en forme $g^*_{Te}(-t)$ ou plus généralement un filtre passe bas qui permet d'échantillonner sans perdre d'information.
La figure 2 illustre l'architecture d'un mode de réalisation préféré de l'invention.
La figure 3 illustre la structure d'un filtre égaliseur fractionné.
La figure 4 montre un diagramme du procédé de réglage de l'égaliseur.

## Description d'un mode de réalisation préféré

La figure 2 illustre plus particulièrement un récepteur suivant le mode de réalisation préféré. D'une manière générale, la structure du récepteur est applicable à tout type de modulation le cas échéant ainsi qu'à tout type de milieu de propagation. On peut considérer d'une manière non limitative le cas de la modulation de phase à quatres états - plus généralement celle de la Modulation par Déplacement de Phase (*dénommée Phase Shift Key* (P.S.K.) chez les anglos saxons) ou encore une modulation de type *Quadrature Amplitude Modulation* (Q.A.M.). L'homme du métier pourra facilement adapter l'enseignement de l'invention aux choix de la modulation qui sera retenue et notamment le calcul de la fonction objective de coût J qui sera développée ci-après au choix particulier de la modulation. Le récepteur comporte un échantillonneur libre 31 qui opère une prise d'échantillons à une cadence suffisamment élevée du signal reçu r(t). La fréquence $1/T_s$ de prise d'échantillons par l'échantillonneur libre 31 sera fixée à une valeur au moins égale au double de la fréquence maximale du spectre de fréquence du signal attendu r(t). En pratique on pourra prendre $T_s \simeq T_e/2$ avec $T_e$ égale à la période symbole. On sait que, suivant la formule de Shannon, il est possible de reconstituer par interpolation tout échantillon d'un signal à spectre fini dès lors que l'on procède à un échantillonnage à une fréquence au moins égale à deux fois la valeur de la fréquence maximale du spectre.
Cette interpolation est réalisée au moyen d'un interpolateur 32 qui est réalisé concrètement au moyen d'un filtre numérique à réponse impulsionnelle finie, variable au cours du temps à l'aide d'un facteur de réglage τk. La conception d'un tel filtre ne posera aucune difficulté à l'homme du métier et la structure particulière de ce filtre ne sera donc pas développée plus avant. Il suffit de noter que ce filtre doit être conçu de manière à calculer à partir d'échantillons prélevés à la cadence libre k x $T_s$ de nouvelles valeurs estimées $r_k$ du signal reçu r(t) à des instants k x $T_s$ + $\tau_k$. On obtient ainsi de nouvelles valeurs échantillons dérivées uniquement par traitement numérique :

$$r_k = r(t) \,|_{\,t = k\,Ts\,+\,\tau k}$$

dans lequel $\tau_k$ apparaît comme un élément de réglage pour la synchronisation et qui est fourni par l'élément de commande 35 assurant conjointement la commande de l'égaliseur et du procédé de synchronisation.
On rappellera que la formule d'interpolation de Shannon, ci-dessous, permet de dériver par voie numérique ces nouvelles valeurs :

$$r(t) = \Sigma_k \, r(kT_s) \, \text{sinc} \, (\pi/T_s ( \, t - k \, T_s) \, )$$

Dans laquelle $T_s$ est la fréquence d'échantillonnage au niveau du récepteur, sinc est l'opérateur sinus cardinal. Cet interpolateur 32 est réalisé au moyen d'un filtre numérique à réponse impulsionnelle finie, laquelle est variable au cours du temps. En effet, l'élément de commande 35 fournit les instants $t_k = k \, T_s + \tau_k$ optimums d'échantillonnage à l'interpolateur 32 qui pourra alors recalculer les échantillons correspondant au moyen de la formule d'interpolation donnée ci-dessus .

Il pourrait être opportun, dans des modes de réalisation particulier de combiner la formule ci-dessus avec des formules d'interpolation linéaire de manière à permettre une meilleure utilisation des ressources de calcul numérique utilisée par le récepteur.

Si l'on considère $T_e$ le temps symbole à l'émission, l'échantillonneur libre effectue par conséquent un échantillonnage à une fréquence qui, dans le mode de réalisation préféré, sera fixé à approximativement $2/ T_e$. Il est à noter que, contrairement à la structure classique des récepteurs, il n'est pas nécessaire que l'échantillonnage soit précisément effectué de manière synchrone avec les période symboles à l'émission. Il suffit que la valeur nominale de la fréquence d'échantillonnage soit fixée à une valeur suffisamment élevée pour assurer une prise d'échantillons suffisante pour permettre l'interpolation numérique. On peut ainsi réaliser un échantillonneur libre fonctionnant à sa propre fréquence nominale sans se préoccuper de la dérive en fréquence de cet échantillonneur et de l'horloge à l'émission comme on doit le faire classiquement. D'une manière générale la réalisation d'un échantillonneur libre est à la portée de l'homme du métier et ne fera pas l'objet de plus amples développements. On constate donc qu'en ce qui concerne la partie analogique du récepteur, celle-ci peut être substantiellement simplifiée, ce qui réduit d'autant le coût de réalisation du récepteur.

Le récepteur de la présente invention réserve la plus grande partie du traitement, qu'il s'agisse du filtrage adapté à la mise en forme à l'émission ou du filtrage adapté au milieu de propagation (dont on a vu que l'on ne pouvait guère le réaliser suivant l'approche classique) d'une manière totalement numérique et en bénéficiant de la souplesse et de la précision de calcul offerte par le traitement numérique. En effectuant le traitement global de la synchronisation et de l'égalisation en aval de l'échantillonneur libre, on peut à présent envisager des traitements numériques parmi les plus sophistiqués pour opérer d'une manière conjointe la synchronisation symbole et l'égalisation puisque l'information qui est reçue par le récepteur se trouve directement transformée sous une forme numérique, échantillonnée à une fréquence double de la fréquence de l'horloge d'émission et indépendamment de cette dernière. Tous les traitements les plus sophistiqués sont dès lors réalisables, avec un risque minime d'erreur, et en particulier la réalisation du filtre adapté aussi bien à la mise en forme à l'émission qu'au milieu de propagation.

Dans le mode de réalisation préféré, on réalise ce filtrage numérique en aval de l'échantillonneur synchrone au moyen d'un double filtre 33-34 réalisant les deux éléments d'un filtre fractionné dont les coefficients sont commandés par l'élément de commande 35. L'utilisation d'un filtre fractionné consistant à traiter deux ou plusieurs échantillons par temps symbole, si elle est connue d'un homme du métier, est cependant traditionnellement réservée à la structure classique d'un récepteur, telle qu'illustrée dans la figure 1, c'est à dire pour traiter par suréchantillonnage des échantillons qui sont présumés synchrones comme cela a été rappelé précédemment. Comme on le sait, l'utilisation d'un filtre fractionné permet alors d'éviter l'emploi d'un filtre récursif dont la mise en oeuvre s'avère toujours délicate et, en outre, assure la possibilité d'utiliser un filtre inverse fini qui évite les erreurs de troncatures.

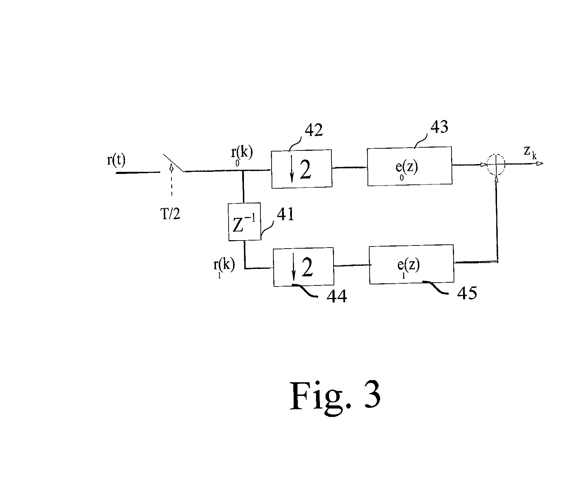

Les figures 3 montre la structure d'un filtre fractionné destiné à traiter deux échantillons par temps symbole. On trouve un élément de retard 41 et, pour chaque branche, un élément de sous échantillonnage 42 (resp. 44) associé à un filtrage numérique 43 (resp. 45). Le premier échantillon du temps symbole se trouve ainsi traité par l'élément 43 assurant le filtrage $e_0(z)$ tandis que le second échantillon du temps symbole fait l'objet d'un traitement $e_1(z)$ assuré par l'élément 45. Les sorties des filtres 43 et 45 sont ensuite combinées au moyen d'un additionneur de manière à produire la sortie $z(k)$ égalisée.

On s'aperçoit que l'utilisation d'un filtre fractionné dans la structure du récepteur représenté en figure 2 permet de combiner avantageusement les avantages classiques du filtre fractionné - à savoir la possibilité d'éviter l'emploi d'un filtre récursif fini sans erreur de troncature - avec les avantages immédiats découlant de l'invention, à savoir un traitement immédiat sous une forme numérique du signal reçu échantillonné de manière non synchrone à une fréquence au moins égale à $2/ T_e$. On est alors assuré de pouvoir reconstituer, par interpolation numérique, tout échantillon désiré et le traiter au moyen d'un filtre non récursif présentant les avantages du filtre fractionné. Il devient possible de réaliser, d'une manière parfaitement aveugle et fractionnée, la synchronisation et l'égalisation du signal reçu.

On obtient ainsi, au moyen d'un système des plus simples, une synchronisation et une égalisation en aveugle des plus efficaces.

Dans un mode de réalisation préféré, l'élément de commande 35 fixe la valeur $\tau$ ainsi que valeurs des coefficients des deux voies du filtre fractionné au moyen d'un critère unique, lequel permet ainsi de réaliser en même temps la synchronisation symbole et l'égalisation aveugle.

A cet effet, l'élément de commande 35 utilise une fonction de coût qu'il s'efforce de minimiser. Plus particulièrement la fonction de coût utilise un critère qui est une propriété caractéristique de la modulation utilisée. Si l'on considère le cas de la Modulation à Déplacement de Phase (M.D.P.), ou Phase Shift Keying (P.S.K.), l'élément de commande 35 calcule la distance entre le module du vecteur $\underline{Z_K}$ en sortie du filtre d'égalisation avec un cercle de module constant.

On pourra avantageusement utiliser la formule suivante pour calculer la fonction objective de coût J :

$$J(\tau, \underline{e}) = E((|Z_k(\tau, \underline{e})|^p - R_p)^m)$$

Dans laquelle $\tau$ est le paramètre de réglage de l'interpolateur, $\underline{e}$ est le vecteur composé des paramètres d'égalisation, E est l'opérateur de calcul de l'espérance mathématique, $|\underline{Z_k}|$ est le module du vecteur complexe en sortie du filtre d'égalisation et p et m sont des entiers. Dans un mode de réalisation préféré, on pourra convenir que p=m=2. $R_2$ est une constante qui dépend de la modulation employée et que l'on peut fixer à la valeur :

$$R2 = E(|a|^4)/E(|a|^2)$$

Il est à noter que la fonction objective J qui est mentionnée ci-dessus n'est qu'un exemple non limitatif de fonction objective permettant, par la minimisation d'un critère de coût, de réaliser en un même traitement la synchronisation et l'égalisation du signal reçu. D'autres fonctions de coûts peuvent être employées, selon la modulation particulière qui est visée, et l'on pourra se reporter avantageusement aux développements connus dans le domaine de l'égalisation aveugle, et notamment à l'article « *Self recovering equalization and carrier tracking in two dimensional data communication systems* » de D. GODARD in IEEE Trans. on Comm. , vol. 28, n° 11, p. 1867-1875, Nov. 1980. Comme on le voit, les techniques connues pour réaliser l'égalisation aveugle peuvent être directement mises en oeuvres dans la nouvelles structure de récepteur qui est proposée de manière à réaliser, de manière conjointe, la synchronisation symbole et l'égalisation du signal reçu.

A cet effet, on considéra donc que la fonction de coût J dépend à la fois du paramètre $\tau$ de synchronisation et des paramètres du vecteur $\underline{e}$ de l'égaliseur fractionné. L'élément de commande 35 de l'égaliseur fractionné 32-33 et de l'interpolateur 32 cherchera alors à minimiser cette fonction de coût en procédant par réglages itératifs à la modification simultanée des valeurs de $\tau$ et des coefficients des L sous filtres $e_0(z)$, $e_1(z)$, $e_2(z)$ etc... de l'égaliseur fractionné.

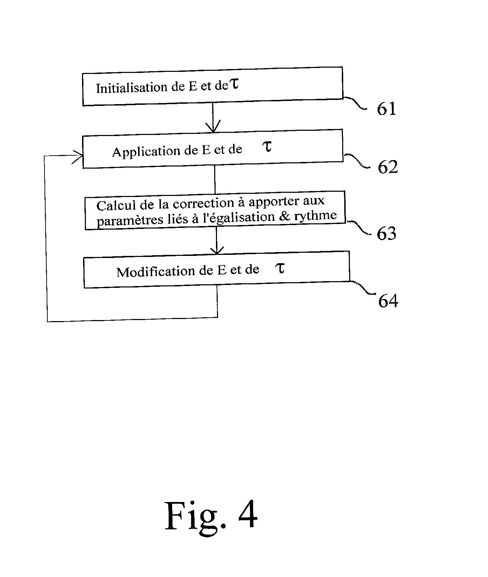

La figure 4 illustre plus particulièrement le procédé itératif permettant de modifier simultanément les valeurs de réglage de $\tau$ et des coefficients de l'égaliseur fractionné.

Dans une première étape 61 on procède à l'initialisation des valeurs de $\tau$ et des coefficients des L sous filtres $\underline{e} = (e_0(z), e_1(z), e_2(z)...)$ de l'égaliseur.

Dans une étape 62, on applique les valeurs précédemment initialisées au calcul d'un premier vecteur $\underline{X_0}$ en sortie de l'interpolateur 32 et d'un premier vecteur $\underline{Z_0}$ en sortie du filtre d'égalisation.

Dans une étape 63, l'unité de commande 35 procède au calcul des corrections à apporter aux valeurs estimées de $\tau$ et du vecteur $\underline{e}$ composé des coefficients des L sous filtres $e_0(z)$, $e_1(z)$, $e_2(z)$ etc... de l'égaliseur fractionné de façon à réduire la valeur du coût J.

Dans une étape 64, l'unité de commande procède à une modification des valeurs de $\tau$ et des coefficients $\underline{e}$ de l'égaliseur fractionné.

Dans un mode de réalisation préféré, on utilisera les formules de calcul suivantes :

$$\underline{e}_{k+1} = \underline{e}_k - \gamma(|Z_k|^2 - R_2)z_k\underline{X^*}_k$$

$$\tau_{k+1} = \tau_k - \mu(|Z_k|^2 - R_2)\operatorname{Re}\{z^*_k \, \partial z_k/\partial \tau \mid \underline{e} = \underline{e}_k; \tau = \tau_k\}$$

où $\underline{X^*}_k$ est le vecteur complexe conjugué du vecteur $\underline{X}_k$ ;
Re() est l'opérateur renvoyant la partie réelle d'un nombre complexe;
la dérivée partielle $\partial z_k/\partial \tau =: \underline{e}^T_k \, \partial\underline{X}_k/\partial \tau + \partial\underline{e}^T_k/\partial \tau \, \underline{X}_k$
et $\gamma$ et $\mu$ sont deux paramètres fixant le pas d'adaptation du procédé itératif. Dans un mode de réalisation préféré on pourra convenir que ces deux paramètres d'ajustage seront eux-même adaptatifs.

Préférentiellement, on pourra utiliser des calculs numériques de dérivées discrètes pour estimer les dérivées partielles mentionnées ci-dessus.

Par exemple, les dérivées partielles peuvent être approchées par les différences finies suivantes :

$$\partial \underline{X}_k / \partial \tau = 2(X_k^{(1)} - X_k^{(0)})$$

$$\partial \underline{e}^T_k / \partial \tau = 2(e_k^{(1)} - e_k^{(0)})$$

où $X_k^{(1)}$ est composé des éléments impairs de $X_k$, $X_k^{(0)}$ des éléments pairs de $X_k$, $e_k^{(1)}$ des éléments impairs de $e_k$ et $e_k^{(0)}$ des éléments pairs de $e_k$.

Une fois les formules recalculées, le procédé effectue ensuite un bouclage à l'étape 62 de manière à appliquer ces nouvelles valeurs au fonctionnement de l'interpolateur et de l'égaliseur.

On obtient ainsi, de cette manière, le réglage successif et simultané de la synchronisation symbole - par la convergence du paramètre $\tau_k$ - mais également celui des paramètres de l'égaliseur.

Il est ainsi proposé une nouvelle architecture qui permet, d'une part , de réduire considérablement la partie analogique du récepteur d'un système de transmission numérique et, d'autre part, de procéder à un traitement global et particulièrement performant de la synchronisation et de l'égalisation au moyen d'un critère unique. Une fois échantillonné par l'échantillonneur libre à une fréquence compatible avec le critère de Shannon, tous les traitements numériques jusqu'aux plus sophistiqués deviennent possibles permettant ainsi de tirer parti de la puissance des processeurs connus.

## Revendications

1. Récepteur pour un dispositif de communication numérique de données destiné à recevoir un signal numérique **caractérisé en ce qu'**il comporte:

   - un échantillonneur libre procédant à une prise physique d'échantillons $r_k$ du signal reçu r(t) à une fréquence au moins égale au double de la fréquence maximale du spectre du signal reçu;
   - un interpolateur numérique permettant de dériver en fonction d'un paramètre de réglage $\tau$ une séquence d'échantillons $X_k$ calculés à partir desdits échantillons physiques;
   - un égaliseur permettant de traiter les échantillons $X_k$ en sortie dudit interpolateur, ledit égaliseur étant ajustable par un jeu de paramètres d'égalisation $\underline{e}$ ;

   **caractérisé en ce qu'**il comporte :

   - une unité de commande (35) fournissant en un même traitement numérique la valeur de $\tau$ destinée à l'interpolateur numérique et les valeurs des paramètres d'égalisation $\underline{e}$ destinés à l'égaliseur numérique.

2. Récepteur selon la revendication 1 **caractérisé en ce que** ladite unité de commande procède à la minimisation d'une fonction de coût J ($\tau$ , $\underline{e}$ ) basée sur une caractéristique du procédé de modulation employé.

3. Récepteur selon la revendication 2 **caractérisé en ce que** la modulation est une modulation par déplacement de phase ou une modulation de deux porteuses en quadrature (QAM), et que la fonction de coût représente une distance entre le vecteur de sortie $X_k$ de l'égaliseur et un cercle de rayon constant.

4. Récepteur selon la revendication 3 **caractérisé en ce que** la fonction de coût est calculée comme suit:

$$J(\tau, \underline{e}) = E\left(\left(\left|Z_k(\tau, \underline{e})\right|^p - R_p\right)^m\right)$$

   Dans laquelle $\tau$ est le paramètre de réglage de l'interpolateur, $\underline{e}$ est le vecteur composé des paramètres d'égalisation, E est l'opérateur de calcul de l'espérance mathématique, $|Z_k|$ est le module du vecteur complexe en sortie du filtre d'égalisation, $R_p$ est une constante et p et m sont des entiers.

5. Récepteur selon la revendication 4 **caractérisé en ce que** l'égaliseur est un égaliseur fractionné utilisant deux jeux de coefficients fournis par ladite unité de commande.

**6.** Récepteur selon la revendication 5 **caractérisé en ce que** les paramètres d'égalisation et le paramètre sont calculés comme suit:

$$\underline{e}_{k+1} = \underline{e}_k - \gamma \left( |z_k|^2 - R_2 \right) z_k \underline{X^*}_k$$

$$\tau_{k+1} = \tau_k - \mu \left( |z_k|^2 - R_2 \right) \mathrm{Re}\{z^*_k \, \partial z_k/\partial \tau \, | \underline{e} = \underline{e}_k; \, \tau = \tau_k\}$$

avec $\underline{X^*}_k$ est le vecteur complexe conjugué du vecteur $\underline{X}_k$ ;
Re() est l'opérateur renvoyant la partie réelle d'un nombre complexe;
la dérivée partielle $\partial z_k/\partial \tau =: \underline{e}^T_k \, \partial \underline{X}_k/\partial \tau + \partial \underline{e}^T_k/\partial \tau \, \underline{X}_k$
et $\gamma$ et $\mu$ sont deux paramètres fixant le pas d'adaptation du procédé itératif.

**7.** Récepteur selon la revendication 6 **caractérisé en ce que** les paramètres $\gamma$ et $\mu$ sont deux paramètres adaptatifs.

**8.** Dispositif de transmission numérique doté d'un récepteur tel que défini dans les revendications 1 à 7.

**9.** Procédé permettant de traiter le signal reçu dans un dispositif de communication numérique comportant les étapes suivantes :

- effectuer au moyen d'un échantillonneur libre une prise physique d'échantillons $r_k$ du signal reçu r(t) à une fréquence au moins égale au double de la fréquence maximale du spectre du signal reçu;
- dériver par interpolation numérique une séquence d'échantillons $X_k$ calculés à partir desdits échantillons physiques en fonction d'un paramètre de réglage $\tau$;
- égaliser les échantillons $X_k$ en fonction d'un jeu de paramètres d'égalisation $\underline{e}$ ;
- optimiser en un même traitement numérique les valeurs de $\tau$ destinée à l'interpolateur numérique et les valeurs des paramètres d'égalisation $\underline{e}$ destinés à l'égaliseur numérique.

**10.** Procédé selon la revendication 9 **caractérisé en ce que** ledit traitement optimal procède à la minimisation d'une fonction de coût J ($\tau$ , $\underline{e}$ ) basée sur une caractéristique du procédé de modulation employé.

11    12    13   $r(kT_s)$   14

$a_k$

$g_{T_e}(t)$   $a(t)$   $c(t)$   $w(t)$   $\underline{r(t)}$   $g^*\,Te\,(-t)$   Egaliseur   $z(kT_s)$

16

$T_s$

algorithme
d'égalisation

15

Emetteur    Canal de
transmission    récepteur

**Fig.1**     Synchrone: Ts = Te

9

Fig.2

Fig. 3

```
┌─────────────────────────────────────┐
│   Initialisation de E et de τ        │ ⌐ 61
└─────────────────────────────────────┘
                │
                ▼
┌─────────────────────────────────────┐
│   Application de E et de    τ        │ ⌐ 62
└─────────────────────────────────────┘
                │
                ▼
┌─────────────────────────────────────┐
│ Calcul de la correction à apporter aux│
│ paramètres liés à l'égalisation & rythme│ ⌐ 63
└─────────────────────────────────────┘
                │
                ▼
┌─────────────────────────────────────┐
│   Modification de E et de   τ        │ ⌐ 64
└─────────────────────────────────────┘
```

# Fig. 4

**EP 1 271 837 A1**

<table>
<tr><td rowspan="2">Office européen<br>des brevets</td><td rowspan="2">**RAPPORT DE RECHERCHE EUROPEENNE**</td><td>Numéro de la demande</td></tr>
<tr><td>EP 02 36 8066</td></tr>
</table>

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 018 166 A (TJAHJADI TARUNA ET AL) 21 mai 1991 (1991-05-21) * abrégé; figure 1 * | 1,9 | H04L7/02 |
| Y | * colonne 5, ligne 14 - colonne 6, ligne 8 * | 2-7,10 | |
| Y | ESSEBBAR A ET AL: "An algorithm for blind equalization and synchronization" JOURNAL OF THE FRANKLIN INSTITUTE, MAY 1996, ELSEVIER, UK, vol. 333B, no. 3, pages 339-347, XP001075024 ISSN: 0016-0032 * le document en entier * | 2-7,10 | |

**DOMAINES TECHNIQUES RECHERCHES (Int.Cl.7)**

H04L

Le présent rapport a été établi pour toutes les revendications

| Lieu de la recherche | Date d'achèvement de la recherche | Examinateur |
|---|---|---|
| LA HAYE | 19 septembre 2002 | Fouasnon, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 36 8066

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

19-09-2002

| Document brevet cité au rapport de recherche | Date de publication | Membre(s) de la famille de brevet(s) | Date de publication |
|---|---|---|---|
| US 5018166 A | 21-05-1991 | CA 2025656 A1 | 11-04-1991 |

Pour tout renseignement concernant cette annexe : voir Journal Officiel de l'Office européen des brevets, No.12/82

EPO FORM P0460